# EUROPEAN PATENT APPLICATION

(11) **EP 4 717 673 A1**
(43) Date of publication of application: **01.04.2026**
(21) Application number: 25166665.7
(22) Date of filing: 27.03.2025
(51) Int. Cl.: C01G 31/00, C01G 39/00, C01G 41/00, C01G 45/1242

(54) **ENERGY STORAGE BATTERY AND PREPARATION METHOD THEREOF**

(30) Priority: 29.09.2024 CN 202411370576
(71) Applicant: Zhejiang Jinko Energy Storage Co., Ltd., Jiaxing, Zhejiang (CN)
(72) Inventor: CHEN, Lili, Haining City, Jiaxing, Zhejiang (CN); YANG, Zixiang, Haining City, Jiaxing, Zhejiang (CN)
(74) Representative: Spachmann, Holger

(57) **Abstract**

The present disclosure relates to the field of energy storage technologies, and particularly to an energy storage batteries and its preparation method. A method for preparing an energy storage battery, comprising: preparing a cathode material, wherein a step of preparing the cathode material comprises: preparing a mixed solution containing lithium manganate, bismuth salt, and molybdenum based acid salt, wherein the molybdenum based acid salt comprises at least one of molybdate, tungstate, and vanadate, in the mixed solution, a molar amount of bismuth ions is n1, a total molar amount of molybdate ions, tungstate ions, and vanadate ions is n2, and a molar amount of lithium manganate is n3, n1:n2: n3=(1.05 to 2.2):1:(100 to 200); performing solvent thermal reaction treatment on the mixed solution to obtain the cathode material. The technical solution of the present disclosure uses molybdenum based acid salt and bismuth salt to modify lithium manganate cathode materials, which improves the high-temperature adaptability and cycling performance of the cathode materials.

## Description

### TECHNICAL FIELD

The present disclosure relates to the field of energy storage technologies, and particularly to an energy storage battery and its preparation method.

### BACKGROUND

Lithium ion batteries dominate global secondary battery market due to their high operating voltage, wide operating range, high specific energy, no pollution, and long service life. In recent years, they have been widely used in fields such as electric vehicles.

Starting from the composition of lithium-ion batteries, cathode materials account for a large proportion, about 3-4 times that of anode electrode materials. It can be seen that the performance of cathode materials directly affects the quality of battery performance. LiCoO₂, LiFePO₄, LiNiₓCoyMn_{1-x-y}O₂ and other cathode materials have been widely studied, but the lithium-ion battery systems assembled with these cathode materials have defects such as high cost and poor safety.

Lithium manganese oxide has the huge advantages of low cost, abundant mineral reserves, and strong safety, and its comprehensive performance has significant advantages over lithium cobalt oxide and ternary materials. However, due to its high temperature adaptability and cycling performance, its application is still greatly limited.

### SUMMARY

The present disclosure provides an energy storage battery and its preparation method, which can improve the high-temperature adaptability and cycling performance of lithium manganate cathode material, thereby enhancing the high-temperature adaptability and cycling performance of the energy storage battery.

In a first aspect, embodiments of the present disclosure provide a method for preparing an energy storage battery, which includes preparing a cathode material. The step of preparing the cathode material includes:
preparing a mixed solution containing lithium manganate, bismuth salt, and molybdenum based acid salt, wherein the molybdenum based acid salt includes at least one of molybdate, tungstate, and vanadate, in the mixed solution, a molar amount of bismuth ions is n1, a total molar amount of molybdate ions, tungstate ions, and vanadate ions is n2, and a molar amount of lithium manganate is n3, where n1:n2: n3=(1.05 to 2.2):1:(100 to 200);
performing solvent thermal reaction treatment on the mixed solution to obtain the cathode material.

In some embodiments, the mixed solution further contains bismuth oxide, and a molar amount of bismuth oxide in the mixed solution is n4, n4:n2= (0.1 to 0.2):1.

In some embodiments, a temperature of the solvent thermal reaction treatment is 140°C to 200°C, and time of the solvent thermal reaction treatment is 12h to 24h.

In some embodiments, the mixed solution further contains 1 mmol to 2 mmol of a surfactant selected from one or more of cetyltrimethyl ammonium bromide, sodium dodecylbenzene sulfonate, cetylamyl dimethyl ammonium bromide.

In some embodiments, pH of the mixed solution is 1-5.

In some embodiments, the preparing a mixed solution containing lithium manganate, bismuth salt, and molybdenum based acid salt includes following steps: uniformly mixing the bismuth salt solution, molybdenum based acid salt solution, and lithium manganate;
before uniformly mixing the bismuth salt solution, molybdenum based acid salt solution, and lithium manganate, the method further includes following steps:
preparing the lithium manganate: uniformly mixing a lithium source and a manganese source, with a molar ratio of lithium ions in the lithium source to manganese ions in the manganese source of (1-1.2): 3, to obtain a manganese lithium mixture, and then calcining the manganese lithium mixture at 750°C to 900°C to obtain lithium manganate; and/or,
preparing the bismuth salt solution: mixing a bismuth source with a first solvent to prepare a first preparation solution, adding a surfactant and bismuth oxide to the first preparation solution to obtain the bismuth salt solution; and/or,
preparing the molybdenum based acid salt solution: mixing a molybdenum based source with a second solvent to prepare a second preparation solution, wherein the molybdenum based source includes at least one of a molybdenum source, a tungsten source, and a vanadium source, to obtain the molybdenum based acid salt solution.

In some embodiments, after adding the surfactant and bismuth oxide to the first preparation solution, the method further comprises adjusting the first preparation solution to be acidic.

In some embodiments, the bismuth source includes bismuth nitrate pentahydrate.

In some embodiments, after mixing the molybdenum based source with a second solvent to prepare a second preparation solution, the method further includes adjusting the second preparation solution to be acidic.

In some embodiments, the molybdenum source includes sodium molybdate dihydrate.

In some embodiments, the tungsten source includes sodium tungstate dihydrate.

In some embodiments, the vanadium source includes sodium vanadate.

In some embodiments, the first solvent and the second solvent are independently selected from at least one of water, ethanol, and ethylene glycol.

In some embodiments, a concentration of the first preparation solution and/or the second preparation solution is ≥ 0.1mol/L.

In a second aspect, the present embodiment also proposes an energy storage battery prepared using the preparation method described in the first aspect. The energy storage battery includes a cathode plate coated with a cathode material. The cathode material includes a lithium manganate matrix, and BiₓM_{y}O_{z} grown in situ on the lithium manganate matrix, wherein x, y, z>0, and M includes at least one of molybdenum element, tungsten element, and vanadium element; and

in the cathode material, a molar amount of lithium manganate matrix is n3, and a molar amount of M element in BiₓM_{y}O_{z} is n2, n2:n3=1:( 100 to 200).

In some embodiments, in the cathode material, a portion of Bi element combines with acid ions of M element to form Biₓ₋ₘM_{y}O_{z}, and another portion Bi element is deposited on Biₓ₋ₘM_{y}O_{z}, where 0<m<x.

In some embodiments, a molar amount of Biₓ₋ₘM_{y}O_{z} in the cathode material is n5, and a molar amount of Bi element deposited on Biₓ₋ₘM_{y}O_{z} is n6, n6:n5=(0.1 to 0.2):1.

Compared with the related art, the technical solution of the present disclosure has at least the following technical effects.

The technical solution of the present disclosure uses molybdenum based acid salt and bismuth salts to modify lithium manganate cathode materials, which improves the high-temperature adaptability and cycling performance of the cathode materials. In solvent thermal reaction treatment, bismuth salts and molybdenum based acid salt in the mixed solution may generate an appropriate amount of molybdenum based acid bismuth (molybdate bismuth, tungstate bismuth, and vanadate bismuth) in situ on the surface of lithium manganate. Due to the fact that molybdenum based acid bismuth (bismuth molybdate, bismuth tungstate, and bismuth vanadate) compounds belong to the Aurivilius compound, they have excellent high-temperature oxidation resistance and structural stability. Combining an appropriate amount of molybdenum based acid bismuth with lithium manganate can improve the high-temperature performance and cycling performance of lithium manganate cathode materials. In addition, due to bismuth molybdate being an excellent semiconductor photocatalyst with suitable bandgap width, it is conducive to the separation of electron hole pairs. By combining it with lithium manganate, it is beneficial to improve the electron mobility of the cathode material, thereby enhancing the rate performance of the cathode material. In addition, the improved cycling performance of the modified lithium manganate cathode material can also be attributed to the unique morphology of molybdenum based acid bismuth. Specifically, due to its particle size smaller than that of lithium manganate, molybdenum based acid bismuth is easy to insert between lithium manganate particles. Moreover, molybdenum based acid bismuth has flower shaped microspheres with wrinkles/pores on its surface, which can tightly bond with lithium manganate particles, not only improving the overall compaction density of the cathode material, but also enhancing its structural stability, thereby further improving the cycling performance of the cathode material.

### BRIEF DESCRIPTION OF DRAWINGS

The present disclosure will be further explained in conjunction with the accompanying drawings and embodiments.
- **FIG. 1**: is a schematic flowchart of a method for preparing an energy storage battery in an embodiment of the present disclosure;
- **FIG. 2**: is a schematic flowchart of a preparation process of a cathode material in an embodiment of the present disclosure; and
- **FIG. 3**: is a schematic flowchart of a preparation process of a cathode material in an embodiment of the present disclosure.

### DESCRIPTION OF EMBODIMENTS

In order to better understand technical solutions of the present disclosure, the embodiments of the present disclosure are described in details with reference to the drawings.

It should be clear that the described embodiments are merely part of the embodiments of the present disclosure rather than all of the embodiments. All other embodiments obtained by those skilled in the art without paying creative labor shall fall into the protection scope of the present disclosure.

The terms used in the embodiments of the present disclosure are merely for the purpose of describing specific embodiment, rather than limiting the present disclosure. The terms "a", "an", "the" and "said" in a singular form in the embodiments of the present disclosure and the attached claims are also intended to include plural forms thereof, unless noted otherwise.

It should be understood that the term "and/or" used in the context of the present disclosure is to describe a correlation relation of related objects, indicating that there may be three relations, e.g., A and/or B may indicate only A, both A and B, and only B. In addition, the symbol "/" in the context generally indicates that the relation between the objects in front and at the back of "/" is an "or" relationship.

Firstly, the present disclosure provides a method for preparing an energy storage battery.

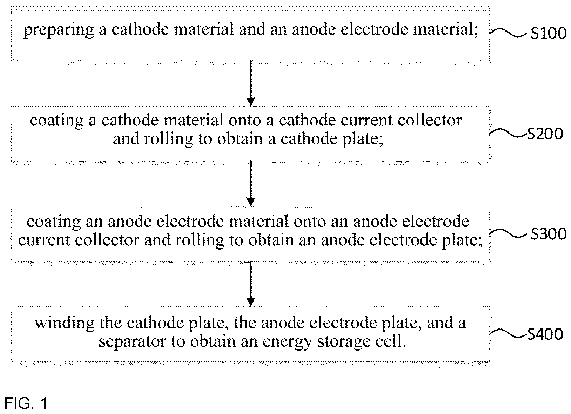

Referring to FIG. 1, in the embodiments of the present disclosure, a method for preparing an energy storage battery include following steps:
S100, preparing a cathode material and an anode electrode material;
S200, coating a cathode material onto a cathode current collector and rolling to obtain a cathode plate;
S300, coating an anode electrode material onto an anode electrode current collector and rolling to obtain an anode electrode plate;
S400, winding the cathode plate, the anode electrode plate, and a separator to obtain an energy storage battery.

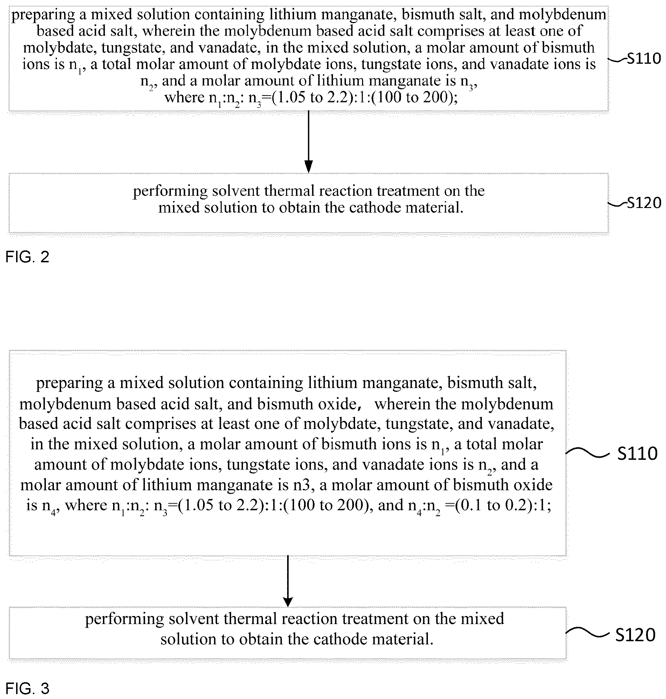

Referring to FIG. 2, in some embodiments, the step of preparing the cathode material includes:
S110, preparing a mixed solution containing lithium manganate, bismuth salt, and molybdenum based acid salt, wherein the molybdenum based acid salt comprises at least one of molybdate, tungstate, and vanadate, in the mixed solution, a molar amount of bismuth ions is n1, a total molar amount of molybdate ions, tungstate ions, and vanadate ions is n2, and a molar amount of lithium manganate is n3, n1:n2: n3=(1.05 to 2.2):1:(100 to 200); and
S120, performing solvent thermal reaction treatment on the mixed solution to obtain the cathode material.

The technical solution of the present disclosure uses molybdenum based acid salt and bismuth salts to modify lithium manganate cathode materials, which improves the high-temperature adaptability and cycling performance of the cathode materials. In solvent thermal reaction treatment, bismuth salts and molybdenum based acid salt in the mixed solution may generate an appropriate amount of molybdenum based acid bismuth (molybdate bismuth, tungstate bismuth, and vanadate bismuth) in situ on the surface of lithium manganate.

Due to the fact that molybdenum based acid bismuth (bismuth molybdate, bismuth tungstate, and bismuth vanadate) compounds belong to Aurivilius compound, this type of compound has excellent high-temperature oxidation resistance and structural stability. Combining an appropriate amount of molybdenum based acid bismuth with lithium manganate can improve the high-temperature performance and cycling performance of lithium manganate cathode materials. In addition, due to bismuth molybdate being an excellent semiconductor photocatalyst with suitable bandgap width, it is conducive to the separation of electron hole pairs. By combining it with lithium manganate, it is beneficial to improve the electron mobility of the cathode material, thereby enhancing the rate performance of the cathode material.

In addition, the improved cycling performance of the modified lithium manganate cathode material can also be attributed to the unique morphology of molybdenum based acid bismuth. Specifically, due to its particle size smaller than that of lithium manganate, molybdenum based acid bismuth is easy to insert between lithium manganate particles. Moreover, molybdenum based acid bismuth has flower shaped microspheres with wrinkles/pores on its surface, which can tightly bond with lithium manganate particles, not only improving the overall compaction density of the cathode material, but also enhancing its structural stability, thereby further improving the cycling performance of the cathode material.

In some embodiments of the present disclosure, the molybdenum based acid salt is a molybdate salt. Compared to bismuth tungstate and bismuth vanadate, bismuth molybdate has more wrinkles/pores on its surface, and its adhesion with lithium manganate particles is higher, which is more conducive to improving the compaction density and structural stability of the cathode material.

The following provides a detailed description of the preparation method provided in the embodiments of the present disclosure.

S110, preparing a mixed solution containing lithium manganate, bismuth salt, and molybdenum based acid salt, wherein the molybdenum based acid salt includes at least one of molybdate, tungstate, and vanadate, in the mixed solution, a molar amount of bismuth ions is n1, a total molar amount of molybdate ions, tungstate ions, and vanadate ions is n2, and a molar amount of lithium manganate is n3, n1:n2: n3=(1.05 to 2.2):1:(100 to 200).

In some embodiments of the present disclosure, the ratio of n1 to n2 can be 1.05:1, 1.3:1, 1.6:1, 1.9:1, 2.2:1, or any value between the values recited. In some embodiments, the ratio of n1 to n2 is (1.05 to 1.2): 1, (2.05 to 2.1): 1, (2.1 to 2.15): 1, or (2.15 to 2.2): 1.

In some embodiments of the present disclosure, the ratio of n2 to n3 can be 1:100, 1:110, 1:120, 1:130, 1:140, 1:150, 1:160, 1:170, 1:180, 1:190, 1:200, or any value between the values recited above. In some embodiments, the ratio of n2 to n3 is 1: (100-120), 1: (120-150), 1: (150-180), or 1: (180 to 200).

In step S110, the molar ratio of bismuth salt, molybdate salt, and lithium manganate in the prepared mixed solution is controlled within an appropriate range, so that the content of molybdenum based acid bismuth generated in situ on the surface of lithium manganate is within an appropriate range. If the content of molybdenum based acid bismuth is too low, it is difficult to effectively improve the high-temperature performance and cycling performance of the cathode material. If the content of molybdenum based acid bismuth is too high, it will have an adverse effect on the electrochemical performance of the cathode material.

Referring to FIG. 3, in some embodiments of the present disclosure, the mixed solution further contains bismuth oxide, and the molar amount of bismuth oxide in the mixed solution is n4, n4:n2=(0.1 to 0.2):1. In some embodiments of the present disclosure, the ratio of n4 to n2 can be 0.1:1, 0.12:1, 0.14:1, 0.16:1, 0.18:1, 0.2:1, or any value between the values recited above. In solvent thermal reaction treatment, bismuth atoms provided by bismuth oxide will deposit on the molybdenum based acid bismuth grown in situ on the surface of lithium manganate. Bismuth oxide, bismuth nitrate, and molybdenum based acid bismuth are homologous, which can improve the conversion rate of bismuth nitrate and even complete the formation of bismuth molybdate on the surface of lithium manganite. On the other hand, it can improve the purity and structural stability of the cathode material. Due to the bismuth atoms provided by bismuth oxide being homologous to molybdenum based acid bismuth, it is easier to seize vacancies on the surface of bismuth molybdate, resulting in fewer impurities on the surface of bismuth molybdate and higher purity of the cathode material. Moreover, because bismuth atoms are homologous to bismuth molybdate, there is an interfacial chemical reaction between the bismuth atoms deposited on bismuth molybdate and bismuth molybdate, which can enhance the bonding tightness between bismuth molybdate particles and further improve the structural stability of the cathode material.

In some embodiments of the present disclosure, the ratio of n4 to n2 is too high, which means that the content of bismuth oxide in the mixed solution is too high, which is not conducive to the in-situ growth of molybdenum based acid bismuth on the surface of lithium manganite. The ratio of n4 to n2 is too low, which means that the content of bismuth oxide in the mixed solution is too high, resulting in too few bismuth atoms deposited on bismuth molybdate, making it difficult to exert the modification effect.

In some embodiments of the present disclosure, further, the mixed solution also contains 1 mmol to 2 mmol of a surfactant. In some embodiments of the present disclosure, the content of surfactant in the mixed solution can be 1 mmol, 1.2 mmol, 1.4 mmol, 1.6 mmol, 1.8 mmol, 2 mmol, or any value between the values recited above. By adding an appropriate amount of surfactant, the morphology of the generated molybdenum based acid bismuth can be regulated, resulting in more wrinkles/pores on the surface of bismuth molybdate, and further improving the bonding tightness between molybdenum based acid bismuth and lithium manganate.

In some embodiments of the present disclosure, the surfactant can be selected from one or more of cetyltrimethyl ammonium bromide (CTAB), sodium dodecylbenzene sulfonate (SDBS), and cetylamyl dimethyl ammonium bromide (DDAC).

In some embodiments of the present disclosure, the pH of the mixed solution is 1 to 5, which can be 1, 2, 3, 4, 5, or any value between the values recited above. At this pH, the morphology of in-situ generated bismuth molybdate on the surface of lithium manganate can be improved: more wrinkles/pores are generated on the surface of bismuth molybdate, which greatly enhances the bonding tightness between molybdenum based acid bismuth and lithium manganate.

In some embodiments of the present disclosure, the preparation of a mixed solution containing lithium manganate, bismuth salt, and molybdenum based acid salt includes the step of uniformly mixing the bismuth salt solution, molybdenum based acid salt solution, and lithium manganate.

In some embodiments, before uniformly mixing the bismuth salt solution, molybdenum based acid salt solution, and lithium manganite, the preparation method further includes the following steps:
preparing the lithium manganate: uniformly mixing a lithium source and a manganese source, with a molar ratio of lithium ions in the lithium source to manganese ions in the manganese source of (1-1.2): 3, to obtain a manganese lithium mixture, and then calcining the manganese lithium mixture at 750°C to 900°C to obtain lithium manganite. The molar ratio of lithium ions in the lithium source to manganese ions in the manganese source can be 1:3, 1.05:3, 1.1:3, 1.15:3, 1.2:3 or any value between the values recited above. The specific temperature for calcination treatment can be 750°C, 800°C, 850°C, 900°C or any value between the values recited above;
preparing the bismuth salt solution: mixing a bismuth source with a first solvent to prepare a first preparation solution, adding a surfactant and bismuth oxide to the first preparation solution to obtain the bismuth salt solution;
preparing the molybdenum based acid salt solution: mixing a molybdenum based source with a second solvent to prepare a second preparation solution, wherein the molybdenum based source comprises at least one of a molybdenum source, a tungsten source, and a vanadium source, to obtain the molybdenum based acid salt solution.

In some embodiments, the molar ratio of lithium ions in the lithium source to manganese ions in the manganese source is (1-1.05): 3, (1.05-1.1): 3, (1.1-1.15): 3, or (1.1-2): 3.

In some embodiments, the temperature for calcination treatment can be 750°C to 800°C, 800°C to 850°C, or 850°C to 900°C.

In some embodiments, after adding surfactants and bismuth oxide to the first preparation solution, the preparation method further includes adjusting the first preparation solution to be acidic, e.g., to a pH of 1, 2, 3, 4, 5, or any value between the values recited above.

In some embodiments, the bismuth source includes bismuth nitrate pentahydrate, and those skilled in the art may also choose other bismuth sources according to actual requirements.

In some embodiments, after mixing the molybdenum based source with the second solvent to prepare the second preparation solution, the preparation method further includes adjusting the second preparation solution to be acidic, e.g., a pH of 1, 2, 3, 4, 5, or any value between the values recited above.

In some embodiments, the molybdenum source includes sodium molybdate dihydrate, and those skilled in the art may also choose other molybdenum sources according to actual requirements.

In some embodiments, the tungsten source includes sodium tungstate dihydrate, and those skilled in the art may also choose other tungsten sources according to actual requirements. In some embodiments, the vanadium source includes sodium vanadate, and those skilled in the art may also choose other vanadium sources according to actual requirements.

In some embodiments, the first solvent and the second solvent are independently selected from at least one of water, ethanol, and ethylene glycol, and those skilled in the art may choose according to actual requirements.

In some embodiments, the concentration of the first preparation solution and/or the second preparation solution is ≥ 0.1mol/L. By adjusting the concentrations of the first and second preparation solutions to an appropriate range, it facilitates the preparation of the first and second preparation solutions, as well as the subsequent button battery performance test of the cathode material.

S120, performing solvent thermal reaction treatment on the mixed solution to obtain the cathode material.

In some embodiments, the temperature for solvent thermal reaction treatment is 140°C to 200°C, which can be 140°C, 150°C, 160°C, 170°C, 180°C, 190°C, 200°C or any value between the values recited above. The temperature of solvent thermal reaction treatment ≥ 140°C is beneficial for improving the yield of in-situ growth of molybdenum based acid bismuth on the surface of lithium manganite. The temperature for solvent thermal reaction treatment is ≤ 200°C, which is beneficial for improving the bonding tightness bismuth atoms provided by bismuth oxide and bismuth molybdate.

In some embodiments, the temperature for solvent thermal reaction treatment is 140°C to 160°C, 160°C to 170°C, 170°C to 180°C, or 180°C to 200°C.

In some embodiments, the time for solvent thermal reaction treatment is between 12h and 24h, e.g., 12h, 16h, 18h, 20h, 22h, 24h, or any value in between.

In some embodiments, the time for solvent thermal reaction treatment is 12h-16h, 16h-18h, 18h-20h, or 20-24h.

In some embodiments of the present disclosure, after solvent thermal reaction treatment of the mixed solution, the preparation method further includes the step of purifying the solvent thermal reaction treated product.

In some embodiments, the purification step includes:
washing the solvent thermal reaction treated product; and
drying the washed product.

In some embodiments, the washing process includes centrifuging the solvent thermal reaction treated product and alternately washing it with deionized water and anhydrous ethanol.

In some embodiments, the drying process includes drying the washed product in a vacuum drying oven at 60 ° C to 80 ° C for 6 to 12 hours, followed by cooling and grinding.

S200, coating the cathode material onto the cathode current collector and rolling to obtain the cathode plate.

In some embodiments, the cathode current collector includes one or more of copper foil, aluminum foil, nickel foil, and composite current collectors.

In some embodiments, before coating the cathode material onto the cathode current collector, it further includes mixing the cathode material prepared in S100 with a conductive agent and a binder to obtain a slurry and then coating the slurry onto the cathode current collector.

In some embodiments, the conductive agent may include at least one of conductive carbon black, lamellar graphite, graphene, or carbon nanotubes.

In some embodiments, the binder may include at least one of polyvinylidene fluoride, vinylidene-hexafluoropropylene copolymer, styrene-acrylate copolymer, styrene-butadiene copolymer, polyamide, polyacrylonitrile, polyacrylates, polyacrylates, polyacrylates, carboxymethyl cellulose sodium, polyvinyl acetate, polyvinylpyrrolidone, polyvinyl ether, polymethyl methacrylate, polytetrafluoroethylene or polyhexafluoropropylene.

In some embodiments, the slurry can be coated on both sides of the cathode current collector using at least one of scraper coating, roll coating transfer coating, or slit extrusion coating. During the coating process, it is necessary to control the coating speed, pressure, and gap between the coating heads to obtain a uniform coating. In some embodiments, the coating speed is greater than or equal to 80m/min, such as 80 m/min, 85 m/min, 90 m/min, 100 m/min, 110 m/min, or 120 m/min.

In some embodiments, after coating, it further includes drying the wet film obtained by coating, to remove moisture and other volatile components. In some embodiments, the equipment for drying treatment may be an oven, for example.

In some embodiments, the coated material is subjected to rolling treatment to obtain the cathode plate. The equipment for rolling treatment, such as a roller press machine, can use the pressure of the rollers in the roller press machine to compact the coated material. During the rolling process, the thickness of the electrode plate will decrease and the density will increase, improving the density and electrochemical performance of the cathode plate. In some embodiments, the rolling speed is less than or equal to 90m/min, such as 30 m/min, 40 m/min, 50 m/min, 60 m/min, 70 m/min, 80 m/min, or 90 m/min. The thickness accuracy of the electrode plate obtained after rolling is ± 3 µ m.

S300, coating the anode electrode material onto the anode electrode current collector and rolling to obtain the anode electrode plate.

In some embodiments, the anode electrode material includes an anode electrode active material, a conductive agent, and a binder.

In some embodiments, the anode electrode active material includes at least one of soft carbon, hard carbon, artificial graphite, natural graphite, amorphous carbon, silicon oxides, or lithium titanate.

In some embodiments, the binder may include at least one of carboxymethyl cellulose (CMC), polyacrylic acid, polyvinylpyrrolidone, polyaniline, polyimide, polyamide imide, polysiloxane, polybutadiene rubber, epoxy resin, polyester resin, polyurethane resin, or polyfluorene.

In some embodiments, the conductive agent may include at least one of conductive carbon black, Ketjen black, acetylene black, carbon nanotubes, or graphene.

In some embodiments, the anode electrode material can be coated on both sides of the anode electrode current collector, and the coating method includes at least one of scraper coating, roller coating transfer coating, or slit extrusion coating. During the coating process, it is necessary to control the coating speed, pressure, and gap between the coating heads to obtain a uniform coating. In some embodiments, the coating speed is greater than or equal to 80m/min, such as 80 m/min, 85 m/min, 90 m/min, 100 m/min, 110 m/min, or 120 m/min.

In some embodiments, after coating, it further includes drying the wet film obtained by coating, to remove moisture and other volatile components. In some embodiments, the equipment for drying treatment may be an oven, for example.

In some embodiments, the coated material is subjected to rolling treatment to obtain an anode electrode plate. The equipment for rolling treatment, such as a roller press, can use the pressure of the rollers in the roller press to compact the coated material. During the rolling process, the thickness of the electrode will decrease and the density will increase, improving the density and electrochemical performance of the anode electrode. In some embodiments, the rolling speed is less than or equal to 90m/min, such as 30 m/min, 40 m/min, 50 m/min, 60 m/min, 70 m/min, 80 m/min, or 90 m/min. The thickness accuracy of the electrode plate obtained after rolling is ± 3 µ m.

S400, rolling the cathode plate, anode electrode plate, and separator to obtain a wound battery battery.

In some embodiments, before winding, the positive and anode electrode plates are cut separately, and the positive and anode electrode plates are divided into fixed widths to form the required battery tab state for the battery structure.

In this step, the cathode plate, upper separator, anode electrode plate, and lower separator are stacked in order, and wrapped with a needle to form independent bare batteries, and fix them with finishing glue.

In some embodiments, the upper diaphragm includes at least one of polyethylene, polypropylene, polyvinylidene fluoride, polyethylene terephthalate, polyimide, or aramid. The lower diaphragm includes at least one of polyethylene, polypropylene, polyvinylidene fluoride, polyethylene terephthalate, polyimide, or aramid. In some embodiments, the thickness of the upper isolation diaphragm and/or the lower diaphragm ranges from 5 µ m to 500 µ m, and can be 5 µ m, 100 µ m, 200 µ m, 300 µ m, 400 µ m, 500 µ m, or any value between the values recited above.

In the second aspect, the present disclosure also proposes an energy storage battery, which can be prepared by the preparation method provided in the above embodiments.

In some embodiments of the present disclosure, the energy storage battery includes a cathode plate coated with a cathode material, the cathode material including a lithium manganate matrix, and BiₓM_{y}O_{z} grown in situ on the lithium manganate matrix, wherein x, y, z>0, and M comprises at least one of molybdenum element, tungsten element, and vanadium element; and in the cathode material, a molar amount of lithium manganate matrix is n3, and a molar amount of M element in BiₓM_{y}O_{z} is n2, n2:n3=1:(100 to 200). The specific ratio of n2 to n3 can be 1:100, 1:120, 1:140, 1:160, 1:180, 1:200 or any value between the values recited above.

BixMyOz belongs to the Aurivilius compound, which has excellent high-temperature oxidation resistance and structural stability. By combining an appropriate amount of BixMyOz with lithium manganate, the high-temperature performance and cycling performance of the cathode material can be improved. Moreover, due to the presence of holes in these compounds, combining them with lithium manganate is also beneficial for improving the electron mobility of the cathode material, thereby enhancing the rate performance of the cathode material. In addition, the improved cycling performance of the cathode material is also attributed to the unique morphology of BiₓM_{y}O_{z}. Specifically, BiₓM_{y}O_{z} is a granular material with a particle size smaller than that of lithium manganate, which is easy to insert between lithium manganate particles. Moreover, BiₓM_{y}O_{z} has a flower shaped microsphere shape with wrinkles/pores on its surface, which can tightly bond with lithium manganate particles. This not only improves the overall compaction density of the cathode material, but also enhances the structural stability of the lithium manganate material, thereby further improving the cycling performance of the cathode material.

In some embodiments, the molar amount of BiₓM_{y}O_{z} in the cathode material is n7, where n7: n3=1: (50 to 100). The specific ratio of n7 to n3 can be 1:50, 1:60, 1:70, 1:80, 1:90, 1:100, or any value between the values recited above.

In some embodiments, further, in the cathode material, a portion of Bi element combines with the acid ion of M element to form Biₓ₋ₘM_{y}O_{z}, and another portion of Bi element is deposited on Biₓ₋ₘM_{y}O_{z}, where 0<m<x.

In some embodiments of the present disclosure, the chemical formula of the cathode material can be expressed as: Bi- Biₓ₋ₘM_{y}O_{z} /LiMn₂O₄, The composition of the cathode material can be observed by scanning electron microscopy.

Due to the homologous relationship between bismuth atoms and bismuth molybdate, there exists an interfacial chemical interaction between the bismuth atoms deposited on bismuth molybdate and bismuth molybdate, which can enhance the bonding tightness between bismuth molybdate particles, thereby further improving the structural stability of the cathode material and enhancing its cycling performance.

In some embodiments, Biₓ₋ₘM_{y}O_{z} includes a combination of one or more of Bi₂MoO₆, Bi₂MoO₆, and BiVO₄.

In some embodiments of the present disclosure, further, the molar amount of Biₓ₋ₘM_{y}O_{z} in the cathode material is n5, and the molar amount of Bi element deposited on Biₓ₋ₘM_{y}O_{z} is n6, n6: n5=(0.1 to 0.2): 1, and the specific ratio of n6 to n5 can be 0.1:1, 0.15:1, 0.2:1, or any value between the values recited above.

The ratio of n6 to n5 is too high, which is not conducive to the in-situ growth of bismuth molybdate on the surface of lithium manganite. The ratio of n6 to n5 is too low, which means that there are too few bismuth atoms deposited on bismuth molybdate. The bismuth atoms deposited on bismuth molybdate are difficult to effectively improve the structural stability of the cathode material.

In some embodiments, the compacted density of the cathode material is 3.06 g/cm³ to 3.22 g/cm³, which can be 3.06 g/cm³, 3.10 g/cm³, 3.14 g/cm³, 3.18 g/cm³, 3.22 g/cm³, or any value between the values recited above.

Below are multiple Examples to further explain the embodiments of the present disclosure. The embodiments of the present disclosure are not limited to the following specific Examples.

### Example 1

(1) 2.0mol of lithium carbonate (Li₂CO₃) and 4.0mol of manganese trioxide (Mn₃O₄) were weighed separately and mixed evenly. The mixed powder was baked at 750°C in an air atmosphere for 16 hours, to obtain lithium manganate after cooling.
(2) 0.0205mol of bismuth nitrate pentahydrate Bi (NO₃)₃·5H₂O, as bismuth source, and 0.01mol of sodium molybdate dihydrate Na₂MoO₄·2H₂O, as molybdenum source, were weighed, respectively, to prepare bismuth salt solution and molybdenum salt solution. 1 mmol of cetyltrimethylammonium bromide (CTAB) and 1mmol of bismuth oxide (Bi₂O₃) were added to the bismuth salt solution, and the pH of the solution was adjusted to 4 with dilute nitric acid.
(3) Bismuth salt solution and molybdenum salt solution were mixed, and dispersed for 1 hour, then 1 mol of lithium manganate powder prepared was added, and was continued stirring for 1 hour to obtain a mixed solution (n1: n2: n3=2.05:1:100 in the mixed solution).
(4) The above mixed solution was transferred to a high-pressure reactor and was heated at 160°C for 20 hours to obtain a reaction product.
(5) After the reaction product was cooled to room temperature, the cooled reaction product was centrifuged and washed alternately with deionized water and anhydrous ethanol.
(6) The product after centrifugation and washing was dried in a vacuum drying oven at 80°C for 12 hours, cooled and ground for later use to obtain the cathode material, which is an in-situ grown bismuth molybdate (Bi-Bi₂MoO₆)/lithium manganate (LiMn₂O₄) composite material.

### Example 2

(1) 2.1 mol of lithium carbonate (Li₂CO₃) and 4.0 mol of manganese trioxide (Mn₃O₄) were weighed separately and mixed evenly. The mixed powder was baked at 800°C in an air atmosphere for 12 hours, to obtain lithium manganate after cooling.
(2) 0.021mol of bismuth nitrate pentahydrate Bi (NO₃)₃·5H₂O and 0.01mol of sodium molybdate dihydrate Na₂MoO₄·2H₂O were weighed as bismuth and molybdenum sources respectively, to prepare bismuth salt solution and molybdenum salt solution. 1mmol of cetyltrimethylammonium bromide (CTAB) and 1mmol of bismuth oxide (Bi₂O₃) were added to the bismuth salt solution, and the pH of the solution was adjusted to 4 with dilute nitric acid.
(3) Bismuth salt solution and molybdenum salt solution were mixed, dispersed for 1 hour, 1 mol of lithium manganate powder prepared was added, and was continued stirring for 1 hour to obtain a mixed solution (n1: n2: n3=2.1:1:100 in the mixed solution).
(4)The above mixed solution was transferred to a high-pressure reactor and was heated at 160°C for 20 hours to obtain the reaction product.
(5) After cooling the reaction product to room temperature, it was centrifuged and washed alternately with deionized water and anhydrous ethanol.
(6) The product after centrifugal washing was dried in a vacuum drying oven at 80°C for 12 hours, cooled and ground for later use to obtain the cathode material, which is an in-situ grown bismuth molybdate (Bi-Bi₂MoO₆)/lithium manganate (LiMn₂O₄) composite material.

### Example 3

(1) 2.2mol of lithium carbonate (Li₂CO₃) and 4.0mol of manganese trioxide (Mn₃O₄) were weighed separately and mixed evenly. The mixed powder was baked at 850°C in an air atmosphere for 12 hours, to obtain lithium manganate after cooling.
(2) 0.0215mol of pentahydrate bismuth nitrate Bi (NO₃)₃·5H₂O and 0.01mol of sodium molybdate dihydrate Na₂MoO₄·2H₂O were weighed as bismuth and molybdenum sources respectively, to prepare bismuth salt solution and molybdenum salt solution. 1mmol of cetyltrimethylammonium bromide (CTAB) and 2mmol of bismuth oxide (Bi₂O₃) were added to the bismuth salt solution, and the pH of the solution was adjusted to 4 with dilute nitric acid.
(3) Bismuth salt solution and molybdenum salt solution were mixed, dispersed for 1 hour, 1.2 mol of lithium manganate powder prepared was added, and was continued stirring for 1 hour to obtain a mixed solution (n1: n2: n3=2.15:1:20 in the mixed solution).
(4) The above mixed solution was transferred to a high-pressure reactor and was heated at 170°C for 16 hours to obtain the reaction product.
(5) After cooling the reaction product to room temperature, it was centrifuged and washed alternately with deionized water and anhydrous ethanol.
(6) The product after centrifugal washing was dried in a vacuum drying oven at 80°C for 12 hours, cooled and ground for later use to obtain the cathode material, which is an in-situ grown bismuth molybdate (Bi- Bi₂MoO₆)/lithium manganate (LiMn₂O₄) composite material.

### Example 4

(1) 2.3 mol of lithium carbonate (Li₂CO₃) and 4.0mol of manganese trioxide (Mn₃O₄) were weighed separately and mixed evenly. The mixed powder was baked at 900°C in an air atmosphere for 12 hours, to obtain lithium manganate after cooling.
(2) 0.022mol of pentahydrate bismuth nitrate Bi (NO₃)₃·5H₂O and 0.01mol of sodium molybdate dihydrate Na₂MoO₄·2H₂O were weighed as bismuth and molybdenum sources, respectively, to prepare bismuth salt solution and molybdenum salt solution. 2mmol of cetyltrimethylammonium bromide (CTAB) and 2mmol of bismuth oxide (Bi₂O₃) were added to the bismuth salt solution, and the pH of the solution was adjusted to 4 with dilute nitric acid.
(3) Bismuth salt solution and molybdenum salt solution were mixed, dispersed for 1 hour, 1.5 mol of lithium manganate powder prepared was added, and was continued stirring for 1 hour to obtain a mixed solution (n1: n2: n3=2.2:1:150 in the mixed solution).
(4) The above mixed solution was transferred to a high-pressure reactor and was heated at 180°C for 12 hours to obtain the reaction product.
(5) After cooling the reaction product to room temperature, it was centrifuged and washed alternately with deionized water and anhydrous ethanol.
(6) The product after centrifugal washing was dried in a vacuum drying oven at 80°C for 12 hours, cooled and ground for later use to obtain the cathode material, which is an in-situ grown bismuth molybdate (Bi-Bi₂MoO₆)/lithium manganate composite material.

### Example 5

(1) 2.2mol of lithium carbonate (Li₂CO₃) and 4.0 mol of manganese trioxide (Mn₃O₄) were weighed separately and mixed evenly. The mixed powder was baked at 900°C in an air atmosphere for 12 hours, to obtain lithium manganate after cooling.
(2) 0.0210mol of pentahydrate bismuth nitrate Bi (NO₃)₃·5H₂O and 0.01mol of sodium molybdate dihydrate Na₂MoO₄·2H₂O were weighed as bismuth and molybdenum sources, respectively, to prepare bismuth salt solution and molybdenum salt solution. 2mmol of cetyltrimethylammonium bromide (CTAB) and 1mmol of bismuth oxide (Bi₂O₃) were added to the bismuth salt solution, and the pH of the solution was adjusted to 3 with dilute nitric acid.
(3) Bismuth salt solution and molybdenum salt solution were mixed, dispersed for 1 hour, 1.5 mol of lithium manganate powder prepared was added, and was continued stirring for 1 hour to obtain a mixed solution (n1: n2: n3=2.15:1:150 in the mixed solution).
(4) The above mixed solution was transferred to a high-pressure reactor and heated at 180°C for 16 hours to obtain the reaction product.
(5) After cooling the reaction product to room temperature, it was centrifuged and washed alternately with deionized water and anhydrous ethanol.
(6) The product after centrifugal washing was dried in a vacuum drying oven at 80°C for 12 hours, cooled and ground for later use to obtain the cathode material, which is an in-situ grown bismuth molybdate (Bi- Bi₂MoO₆)/lithium manganate composite material.

### Example 6

(1) 2.2mol of lithium carbonate (Li₂CO₃) and 4.0mol of manganese trioxide (Mn₃O₄) were weighed separately and mixed evenly. The mixed powder was baked at 850°C in an air atmosphere for 12 hours, to obtain lithium manganate after cooling.
(2) 0.0215mol of pentahydrate bismuth nitrate Bi (NO₃)₃·5H₂O and 0.01mol of sodium molybdate dihydrate Na₂MoO₄·2H₂O were weighed as bismuth and molybdenum sources respectively, to prepare bismuth salt solution and molybdenum salt solution. 1mmol of cetyltrimethylammonium bromide (CTAB) and 2mmol of bismuth oxide (Bi₂O₃) were added to the bismuth salt solution, and the pH of the solution was adjusted to 4 with dilute nitric acid.
(3) Bismuth salt solution and molybdenum salt solution were mixed, dispersed for 1 hour, 1.2 mol of lithium manganate powder prepared was added, and was continued stirring for 1 hour to obtain a mixed solution (n1: n2: n3=2.15:1:20 in the mixed solution).
(4) The above mixed solution was transferred to a high-pressure reactor and was heated at 170°C for 18 hours to obtain the reaction product.
(5) After cooling the reaction product to room temperature, it was centrifuged and washed alternately with deionized water and anhydrous ethanol.
(6) The product after centrifugal washing was dried in a vacuum drying oven at 80°C for 12 hours, cooled and ground for later use to obtain the cathode material, which is an in-situ grown bismuth molybdate (Bi- Bi₂MoO₆)/lithium manganate composite material.

### Example 7

(1) Weigh 2.2mol of (Li₂CO₃) and 4.0mol of manganese trioxide (Mn₃O₄) were weighed separately and mixed evenly. The mixed powder was baked at 900°C in an air atmosphere for 12 hours, to obtain lithium manganate after cooling.
(2) 0.021mol of bismuth nitrate pentahydrate Bi (NO₃)₃·5H₂O and 0.01mol of sodium molybdate dihydrate Na₂MoO₄·2H₂O were weighed as bismuth and molybdenum sources, respectively, to prepare bismuth salt solution and molybdenum salt solution. 2mmol of cetyltrimethylammonium bromide (CTAB) and 2mmol of bismuth oxide (Bi₂O₃) were added to the bismuth salt solution, and the pH of the solution was adjusted to 4 with dilute nitric acid.
(3) Bismuth salt solution and molybdenum salt solution were mixed, dispersed for 1 hour, 1.8 mol of lithium manganate powder prepared was added, and was continued stirring for 1 hour to obtain a mixed solution (n1: n2: n3=2.1:1:180 in the mixed solution).
(4) The above mixed solution was transferred to a high-pressure reactor and heated at 180°C for 18 hours to obtain the reaction product.
(5) After cooling the reaction product to room temperature, it was centrifuged and washed alternately with deionized water and anhydrous ethanol.
(6) The product after centrifugal washing was dried in a vacuum drying oven at 80°C for 12 hours, cooled and ground for later use to obtain the cathode material, which is an in-situ grown bismuth molybdate (Bi- Bi₂MoO₆)/lithium manganate composite material.

### Example 8

Compared with Example 1, the difference lies in the follows.

In step (3), the amount of lithium manganate powder prepared was 2mol, and in the mixed solution, n1:n2:n3=2.05:1:200.

In step (4), the heating temperature of the mixed solution in the high-pressure reactor was 140°C.

### Example 9

Compared with Example 1, the difference lies in the follows.

In step (2), 0.01 mol of molybdenum source was replaced with 0.01 mol of tungsten source, and the selected tungsten source was sodium tungstate dihydrate Na₂WO₄·2H₂O.

### Example 10

Compared with Example 1, the difference lies in the follows.

In step (2), 0.01mol molybdenum source was replaced with 0.0195mol vanadium source, and NaVO₄ was used as the vanadium source.

In step (3), in the mixed solution, n1:n2:n3=1.05:1:100.

### Example 11

Compared with Example 1, the difference lies in the follows.

In step (2), bismuth oxide was not added to the bismuth salt solution.

### Example 12

Compared with Example 1, the difference lies in the follows.

In step (2), CTAB was not added to the bismuth salt.

### Comparison Example 1

The lithium manganate obtained in step (1) of Example 1 was used as the cathode material.

### Comparison Example 2

The difference from Example 1 lies in the steps after Step (2).
(3) Bismuth salt solution and molybdenum salt solution were mixed, dispersed for 1 hour, and heated at 180°C for 12 hours in a high-pressure reactor to obtain the reaction product.
(4) After the reaction product was cooled to room temperature, it was centrifuged and washed alternately with deionized water and anhydrous ethanol. Then, it is dried in a vacuum drying oven at 80°C for 12 hours, cooled, and ground for later use to obtain bismuth molybdate powder.
(5) 1mol of lithium manganate powder prepared was added by adding bismuth molybdate powder to the above, mixed evenly, to obtain the cathode material, which is a physical mixture of bismuth molybdate and lithium manganate.

### Comparison Example 3

The difference from Example 1 lies in the follows.

In step (3), the molar amount of the prepared lithium manganate powder added was 0.1 mol, and in the resulting mixed solution, n1:n2:n3=2.05:1:10.

### Comparison Example 4

The difference from Example 1 lies in the follows.

In step (3), the molar amount of the prepared lithium manganate powder added was 5mol, and in the resulting mixed solution, n1:n2:n3=2.05:1:500.

**The performance of the cathode materials prepared in Examples 1-12 and Comparative**

### Examples 1-4 was tested using the following methods.

### 1. Compaction density test:

The compaction performance of the cathode material was tested using the American Mecano 4350 compaction density meter. 1g of cathode material was taken and compacted under 3t pressure for 30 seconds to obtain the compaction data of the material. The compaction density meets >3 g/cm3.

### 2. Button cell performance test:

0.8g of cathode material, 0.1g of conductive carbon black, and 0.1g of polyvinylidene fluoride were taken and placed in a ball milling jar. 15ml of N-methylpyrrolidone was added and ball milled to form a uniform slurry. Then, it was evenly coated on aluminum foil and dried under vacuum at 110°C for 12 hours to obtain cathode plates. The dried electrode plate was cut into circular sheets with a diameter of 15mm, which is the cathode plate. The button battery was assembled and sealed in the glove box according to the order of the negative shell, spring plate, gasket, anode electrode plate, separator (Celgard PP/PE/PP three-layer composite film), electrolyte (EC/DMC/EMC volume ratio 1:1:1, LiPF₆ concentration of 1mol/L), cathode plate, and positive shell, and let it stand for 24 hours. Subsequently, the obtained battery was placed in a constant temperature chamber for testing. The battery was discharged to 2.0V at a current density of 1C, allowed to stand for 2 minutes, and then charged to 4.2V at a constant current density of 1C. The above steps were repeated for 200 cycles to obtain the cycle retention rate.

Using the LAND battery testing system, discharge capacity (0.1C/0.5C/1C) and first cycle charge discharge efficiency performance tests were test at 25°C and 3.0 V to 4.3 V. The reference capacity was set to 200mA/g and a current density corresponds to 1C is 200mA/g. The test results of the cathode materials prepared in Examples 1-12 and Comparative Examples 1-4 are shown in Table 1 below.

**Table 1**

| **Sample** | **Compact Density (g/cm³)** | **0.1C Capacity (mAh/g)** | **First Efficiency (%)** | **200-Cycle Capacity Retention (%)** | **Capacity Recovery Rate After 48 h of full charge storage at 60°C** |
|---|---|---|---|---|---|
| Example 1 | 2.32 | 126 | 98.2 | 98.3 | 94.3 |
| Example 2 | 2.35 | 132 | 98.5 | 97.4 | 94.1 |
| Example 3 | 2.42 | 130 | 98.7 | 97.2 | 94.3 |
| Example 4 | 2.44 | 129 | 98.6 | 98.2 | 94.6 |
| Example 5 | 2.52 | 127 | 98.7 | 98.3 | 94.2 |
| Example 6 | 2.44 | 128 | 98.6 | 98.6 | 94.5 |
| Example 7 | 2.43 | 125 | 98.8 | 98.0 | 94.1 |
| Example 8 | 2.36 | 124 | 98.3 | 96.5 | 93.7 |
| Example 9 | 2.31 | 125 | 97.1 | 96.3 | 93.9 |
| Example 10 | 2.23 | 124 | 98.3 | 80.1 | 81.4 |
| Example 11 | 2.28 | 124 | 98.0 | 95.5 | 91.8 |
| Example 12 | 2.34 | 125 | 98.3 | 98.0 | 93.6 |
| Comparison Example 1 | 2.23 | 124 | 98.3 | 80.1 | 81.4 |
| Comparison Example 2 | 2.41 | 120 | 97.8 | 87.1 | 88.6 |
| Comparison Example 3 | 2.13 | 115 | 97.4 | 82.3 | 84.7 |
| Comparison Example 4 | 2.22 | 125 | 98.2 | 83.1 | 84.3 |

In Table 1 above:
0.1C gram capacity "refers to the amount of electricity that a battery can discharge at a discharge rate of 0.1C.

The "first effect" refers to the ratio of the capacity released after the battery is fully charged for the first time to the capacity released during the first full charge.

The "200 cycle capacity retention rate" refers to the percentage value obtained by comparing the capacity of a fully charged battery after 200 cycles of charge and discharge with the capacity of the first fully charged battery.

The capacity recovery rate after 48 hours of full charge storage at 60°C refers to the ratio of the discharge capacity to the initial capacity of the battery after being fully charged and stored at 60°C for 48 hours.

In Table 1 above, by analyzing Examples 1-12 and Comparative Examples 1-4, it can be concluded that modifying the lithium manganate cathode material with appropriate amounts of molybdate and bismuth salts can improve its compaction density, high temperature performance, and cycling performance.

Comparing Example 1 with Comparative Example 1, it can be concluded that modifying the lithium manganate cathode material with molybdenum based acid salts and bismuth salts can effectively improve the high-temperature performance and cycling performance of the cathode material.

Comparing Example 1 with Comparative Example 2, it can be concluded that although the physical mixing of molybdate and bismuth salts with lithium manganate cathode material can improve the compaction density of the cathode material to a certain extent, it cannot improve the defects of the cathode material in lithium-ion battery applications. By in-situ generating molybdenum based acid bismuth from molybdenum based acid salt and bismuth salts on the surface of lithium manganate cathode material, the structural stability of the cathode material can be improved, thereby effectively enhancing the capacity retention and recovery rate of the cathode material, that is, improving the high-temperature performance and cycling performance of the cathode material.

Comparing Example 1 with Comparative Example 3, it can be concluded that the content of lithium manganate in the cathode material is too low, that is, the content of molybdenum based acid bismuth is too high, which will affect the compaction density, gram capacity, first effect, high temperature performance, and cycling performance of the cathode material. Comparing Example 1 with Comparative Example 4, it can be concluded that the content of lithium manganate in the cathode material is too high, that is, the content of molybdenum based acid bismuth is too low. The modification effect of bismuth molybdate on the lithium manganate material is not significant, which is not conducive to improving the high-temperature performance and cycling performance of the cathode material.

Comparing Example 1 with Example 11, it can be concluded that bismuth atoms deposited on bismuth molybdate can enhance the bonding tightness between bismuth molybdate particles (generated by the reaction of molybdate and bismuth salts), which is beneficial for improving the cycling performance of the cathode material. The reason is that the bismuth atoms in bismuth oxide are homologous to bismuth molybdate. After the bismuth atoms in bismuth oxide deposit on the surface of bismuth molybdate, there is an interfacial chemical reaction between them and bismuth molybdate, which can improve the bonding tightness between bismuth molybdate particles, further enhancing the structural stability of the cathode material. This in turn improves the capacity recovery rate of the cathode material after 48 hours of storage at full charge at 60°C, and also improves the cycling performance of the cathode material.

Comparing Example 1 with Example 12, it can be concluded that adding an appropriate amount of surfactant can enhance the bonding tightness between molybdenum based acid bismuth (formed by the reaction of molybdenum based acid salt and bismuth salts) and lithium manganate, resulting in an increase in the compaction density of the cathode material. Moreover, the addition of surfactants makes the microstructure of molybdenum based acid bismuth more excellent, with an increased specific surface area and porosity. This is conducive to the tightness bonding between lithium manganate and the in-situ formation of molybdenum based acid bismuth on its surface, which improves the structural stability of the cathode material. As a result, the volume expansion of the cathode material at high temperatures is smaller, and the capacity recovery rate after 48 hours of full charge storage at 60°C is higher, enhancing its high-temperature adaptability.

The above are only the preferred embodiments of the present disclosure and are not intended to limit the present disclosure. Any modifications, equivalent substitutions, improvements, etc. made within the spirit and principles of the present disclosure should be included within the scope of protection of the present disclosure.

## Claims

1. A method for preparing an energy storage battery, comprising:
preparing a cathode material, wherein preparing the cathode material comprises:
preparing a mixed solution containing lithium manganate, bismuth salt, and molybdenum based acid salt, wherein the molybdenum based acid salt comprises at least one of molybdate, tungstate, and vanadate, and in the mixed solution, a molar amount of bismuth ions is n1, a total molar amount of molybdate ions, tungstate ions, and vanadate ions is n2, and a molar amount of lithium manganate is n3, where n1:n2: n3=(1.05 to 2.2):1:(100 to 200); and
performing solvent thermal reaction treatment on the mixed solution to obtain the cathode material.

2. The method according to claim 1, wherein the mixed solution further contains bismuth oxide, and a molar amount of bismuth oxide in the mixed solution is n4, n4:n2=(0.1 to 0.2):1.

3. The method according to claim 1, wherein a temperature of the solvent thermal reaction treatment is 140°C to 200°C, and time of the solvent thermal reaction treatment is 12 h to 24 h.

4. The method according to claim 3, wherein the temperature of the solvent thermal reaction treatment is 150°C to 190°C, and time of the solvent thermal reaction treatment is 16 h to 22 h.

5. The method according to claim 1, wherein the mixed solution further contains 1 mmol to 2 mmol of a surfactant selected from one or more of cetyltrimethyl ammonium bromide, sodium dodecylbenzene sulfonate, and cetyl amyl dimethyl ammonium bromide.

6. The method according to claim 1, wherein pH of the mixed solution is 1 to 5.

7. The method according to any one of claims 1-6, wherein the preparing the mixed solution containing lithium manganate, bismuth salt, and molybdenum based acid salt comprises :
uniformly mixing the bismuth salt solution, molybdenum based acid salt solution, and lithium manganate;
before uniformly mixing the bismuth salt solution, molybdenum based acid salt solution, and lithium manganate, the method further comprises:
preparing the lithium manganate: uniformly mixing a lithium source and a manganese source, with a molar ratio of lithium ions in the lithium source to manganese ions in the manganese source of (1-1.2): 3, to obtain a manganese lithium mixture, and then calcining the manganese lithium mixture at 750°C to 900°C to obtain the lithium manganate; and/or,
preparing the bismuth salt solution: mixing a bismuth source with a first solvent to prepare a first preparation solution, and adding a surfactant and bismuth oxide to the first preparation solution to obtain the bismuth salt solution; and/or,
preparing the molybdenum based acid salt solution: mixing a molybdenum based source with a second solvent to prepare a second preparation solution, wherein the molybdenum based source comprises at least one of a molybdenum source, a tungsten source, and a vanadium source, to obtain the molybdenum based acid salt solution.

8. The method according to claim 7, further comprising at least one of the following features (1) - (5):
(1) after adding the surfactant and bismuth oxide to the first preparation solution, the method further comprises adjusting the first preparation solution to be acidic;
(2) the bismuth source comprises bismuth nitrate pentahydrate;
(3) after the mixing the molybdenum based source with a second solvent to prepare a second preparation solution, the method further comprises adjusting the second preparation solution to be acidic;
(4) the molybdenum source comprises sodium molybdate dihydrate;
(5) the tungsten source comprises sodium tungstate dihydrate;

9. The method according to claim 7, wherein the vanadium source comprises sodium vanadate;

10. The method according to claim 7, wherein the first solvent and the second solvent are independently selected from at least one of water, ethanol, and ethylene glycol; and

11. The method according to claim 7, wherein a concentration of the first preparation solution and/or the second preparation solution is ≥ 0.1mol/L.

12. An energy storage battery prepared by the method according to any one of claims 1-11, wherein the energy storage battery comprises a cathode plate coated with a cathode material, the cathode material comprising a lithium manganate matrix, and BiₓM_{y}O_{z} grown in situ on the lithium manganate matrix, where x>0, y>0 and z>0, and M comprises at least one of molybdenum element, tungsten element, and vanadium element; and
in the cathode material, a molar amount of lithium manganate matrix is n3, and a molar amount of M element in BiₓM_{y}O_{z} is n2, where n2:n3=1:(100 to 200).

13. The energy storage battery according to claim 12, wherein in the cathode material, a portion of Bi element combines with acid ions of M element to form Biₓ₋ₘM_{y}O_{z}, and another portion of Bi element is deposited on Biₓ₋ₘM_{y}O_{z}, where 0<m<x.

14. The energy storage battery according to claim 13, wherein a molar amount of Biₓ₋ₘM_{y}O_{z} in the cathode material is n5, and a molar amount of Bi element deposited on Biₓ₋ₘM_{y}O_{z} is n6, where n6:n5=(0.1 to 0.2):1.

15. The energy storage battery according to any one of claims 12-14, a compacted density of the cathode material is 3.06 g/cm³ to 3.22 g/cm³.
